# EUROPEAN PATENT APPLICATION

(11) **EP 4 696 214 A1**
(43) Date of publication of application: **18.02.2026**
(21) Application number: 24795752.5
(22) Date of filing: 28.03.2024
(51) Int. Cl.: A47L 11/30, G05D 1/00, A47L 11/40

(54) **RESIDUAL-WATER-STAIN RECOVERY METHOD AND APPARATUS, AND ROBOT AND STORAGE MEDIUM**

(30) Priority: 28.04.2023 CN 202310489102
(71) Applicant: Shenzhen Pudu Technology Co., Ltd., Shenzhen, Guangdong 518000 (CN)
(72) Inventor: DU, Liming, Shenzhen, Guangdong 518000 (CN); XU, Jirui, Shenzhen, Guangdong 518000 (CN); CHEN, Chao, Shenzhen, Guangdong 518000 (CN)
(74) Representative: KIPA AB
(86) International application number: PCT/CN2024/084478
(87) International publication number: WO 2024/222371

(57) **Abstract**

The present application relates to a residual-water-stain recovery method. The method comprises: when a robot completes a floor washing operation, acquiring an operation path of the robot; generating a residual-water-stain recovery path on the basis of the operation path; and controlling the robot to move on the residual-water-stain recovery path, so as to recover residual water stains.

## Description

### CROSS-REFERENCE TO RELATED APPLICATION(S)

The present application claims priority to a Chinese patent application filed with the China Patent Office on April 28, 2023, the application number and name of which are 202310489102.3 and "Residual-Water-Stain Recovery Method and Apparatus, Robot, and Storage Medium", and the content of all of which is incorporated by reference in the present application.

### TECHNICAL FIELD

The present disclosure relates to the technical field of cleaning robots, in particular to a residual-water-stain recovery method, a residual-water-stain recovery apparatus, a robot, and a storage medium.

### BACKGROUND

With the development of automation technology, cleaning technology has gradually entered the era of intelligence and mechanization, and cleaning robots have come into being. During operation, the cleaning robots sweep and scrub a surface of an operation area to achieve a cleaning effect.

In the prior art, when performing a surface scrubbing operation, the cleaning robots recover water stains on the surface through the cooperation of a water-sucking scratcher and a fan. However, in actual use, it is found that residual water stains still exist on a path close to a place where the surface scrubbing operation is ended.

### SUMMARY

A residual-water-stain recovery method, a residual-water-stain recovery apparatus, a robot, and a storage medium are provided according to various embodiments of the present disclosure.

A robot, includes a memory, a processor, and a computer-readable instruction stored in the memory and executable on the processor, and the processor implements following steps when executing the computer-readable instruction:
when the robot completes a surface scrubbing operation, obtaining an operation path of the robot;
based on the operation path, generating a residual-water-stain recovery path; and,
controlling the robot to move on the residual-water-stain recovery path to recover residual water stains.

A residual-water-stain recovery method, includes following steps:
when a robot completes a surface scrubbing operation, obtaining an operation path of the robot;
based on the operation path, generating a residual-water-stain recovery path; and,
controlling the robot to move on the residual-water-stain recovery path to recover residual water stains.

A residual-water-stain recovery apparatus, includes:
an obtainment module, configured to: when a robot completes a surface scrubbing operation, obtain an operation path of the robot;
a generation module, configured to: based on the operation path, generate a residual-water-stain recovery path; and,
a recovery module, configured to: control the robot to move on the residual-water-stain recovery path to recover residual water stains.

A computer-readable storage medium, stores a computer program, and the computer program is executed by a processor to implement the steps of the above method.

A computer program product, includes a computer program, and the computer program is executed by a processor to implement the steps of the above method.

Details of one or more embodiments of the present disclosure are set forth in the following drawings and description. Other features and advantages of the present disclosure become apparent from the description, drawings, and claims.

### BRIEF DESCRIPTION OF DRAWINGS

In order to provide a clearer explanation of the technical solutions in the embodiments of the present disclosure or in the prior art, a brief description is given to the accompanying drawings required for the description of the present embodiments or the prior art. Obviously, the accompanying drawings are only some embodiments of the present disclosure. For those ordinary skilled in the art, other drawings can be obtained based on the accompanying drawings without any creative efforts.
FIG. 1 is a diagram showing an application environment of a residual-water-stain recovery method in one embodiment.
FIG. 2 is a schematic diagram of a process of the residual-water-stain recovery method in one embodiment.
FIG. 3 is a schematic diagram of a process of steps of recovering residual water stains in situ in one embodiment.
FIG. 4 is a schematic diagram showing a comparison of the residual-water-stain recovery method before and after use in one embodiment.
FIG. 5 is a structural block diagram of a residual-water-stain recovery apparatus in one embodiment.
FIG. 6 is a diagram showing an internal structure of a robot in one embodiment.

### DETAILED DESCRIPTION OF EMBODIMENTS

In order to facilitate the understanding of the present disclosure, the present disclosure is described more fully below with reference to the related drawings. Some preferred embodiments of the present disclosure are given in the drawings. However, the present disclosure can be implemented in many different forms and is not limited to the embodiments described herein. A purpose of providing these embodiments is to make the understanding of the disclosure of the present disclosure more thorough and comprehensive.

Unless otherwise defined, all technical and scientific terms used herein have the same meaning as those commonly understood by those skilled in the art to which the present disclosure belongs. The terms used herein in the specification of the present disclosure are for a purpose of describing specific embodiments and are not intended to limit the present disclosure. The term "and/or" used herein includes any and all combinations of one or more of associated listed items.

In the prior art, during a cleaning robot performing a surface scrubbing operation, water stains on the ground surface are recovered through the cooperation of a water-sucking scratcher and a fan. However, in actual use, it is found that when the robot completes the surface scrubbing operation, if the robot stops running immediately, the recovery rate of residual water stains on a last section of a path is low due to a high content of mud and sand in the last section of the path, resulting in some residual water stains existing on the ground surface in the last section of the path. Not only that, after the robot stops running, residual water stains on a cleaning component of the robot flow to the ground surface, resulting in residual water stains existing on a place where the robot stays. Based on the above problem, the present disclosure provides a residual-water-stain recovery method, a residual-water-stain recovery apparatus, a robot, and a storage medium that can solve the problem of the residual water stains on the path close to the place where the surface scrubbing operation is ended.

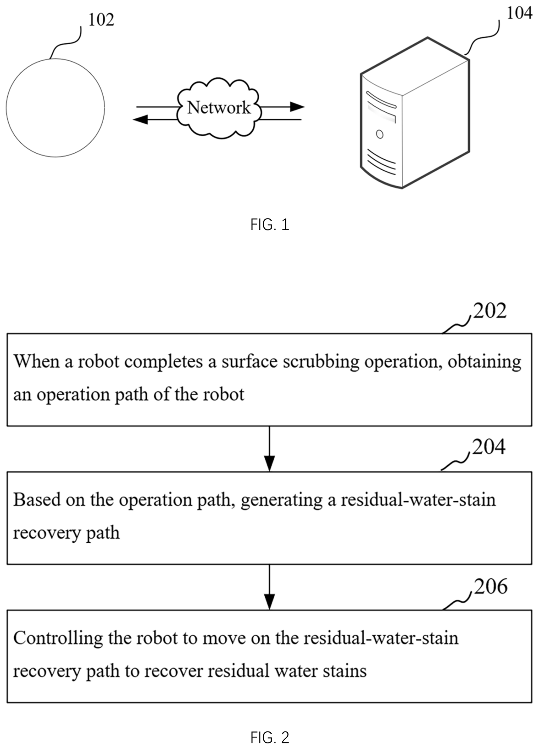

The residual-water-stain recovery method provided in the embodiments of the present disclosure can be applied in an application environment shown in FIG. 1. The robot 102 communicates with a server 104 through a network. The server 104 can be implemented with an independent server or a server cluster composed of multiple servers. A data storage system can store data that needs to be processed by the server 104. The data storage system can be integrated at the server 104, or can be placed at a cloud or other network servers. The robot and the server can be used solely to execute the residual-water-stain recovery method provided in the embodiments of the present disclosure. The robot and the server can also be used together to execute the residual-water-stain recovery method provided in the embodiments of the present disclosure. For example, when the robot completes a surface scrubbing operation, a processor of the robot obtains the robot's operation path, generates a residual-water-stain recovery path based on the operation path, controls the robot to move on the residual-water-stain recovery path, and recovers residual water stains. The robot may be a cleaning robot, or may be other types of service robots with a cleaning function.

In one embodiment, as shown in FIG. 2, a robot is provided, including a memory, a processor, and a computer-readable instruction stored in the memory and executable on the processor. The processor implements the following steps when executing the computer-readable instruction:

Step 202, when the robot completes a surface scrubbing operation, obtaining an operation path of the robot.

The surface scrubbing operation refers to an operation of the robot to clean an operation surface. The operation path refers to a movement route of the robot when performing the surface scrubbing operation. The operation path may be an automatically generated path, which refers to a path automatically generated by an algorithm according to an operation area. The operation path may also be a hand-pushed path, which refers to a path formed by an operator pushing the robot to move. In the process of the robot performing the surface scrubbing operation, the robot moves on the operation path. During the movement, a clean-water pump is controlled to pump out the water in a clean-water tank, a main brush is controlled to clean a ground surface, and a side brush, a water-sucking scratcher, and other cleaning components are controlled to gather dirt and water stains on the ground surface together, then the water stains on the ground surface are sucked into a sewage tank through a fan to achieve a cleaning effect.

Exemplarily, when the robot completes the surface scrubbing operation, a processor of the robot obtains the operation path corresponding to the surface scrubbing operation.

Step 204, generating a residual-water-stain recovery path based on the operation path.

The residual-water-stain recovery path refers to a path for recovering the residual water stains in the surface scrubbing operation. The residual-water-stain recovery path can be set according to actual needs. The residual-water-stain recovery path includes but is not limited to at least one of a first recovery path and a second recovery path mentioned later.

Exemplarily, the processor of the robot generates the residual-water-stain recovery path based on the operation path and a preset distance.

Step 206, controlling the robot to move on the residual-water-stain recovery path to recover residual water stains.

The residual water stains refer to dirt such as sewage, dust, sand, etc. remaining on the operation surface of the robot or the cleaning component of the robot.

Exemplarily, the processor of the robot controls the robot to move on the residual-water-stain recovery path, and during the movement of the robot on the residual-water-stain recovery path, controls the water-sucking scratcher and the fan to recover the residual water stains on the residual-water-stain recovery path.

In the present embodiment, when the robot completes the surface scrubbing operation, the residual-water-stain recovery path is generated according to the operation path, and the robot is controlled to move on the residual-water-stain recovery path. In the process of the robot moving on the residual-water-stain recovery path, the residual water stains on the residual-water-stain recovery path are recovered, which can reduce the residual water stains on the above path. At the same time, in the process of the movement of the robot, residual water stains on the cleaning component of the robot flow to the ground surface. By recovering the residual water stains on the ground surface, the residual water stains on the cleaning component of the robot are recovered. After the robot stops running, no residual water stains flow from the cleaning component of the robot to the ground surface, further reducing the residual water stains on the ground surface.

In one embodiment, the residual-water-stain recovery path includes a first recovery path, and the processor implements the following steps when executing the computer-readable instruction:

in the process of controlling the robot to move on the first recovery path, controlling the robot to move back a preset first distance from an operation end point of the operation path to make the robot reach a preset first end point, and then controlling the robot to move from the preset first end point to the operation end point to make the robot reach a preset second end point that is a preset second distance away from the preset first end point, where the aforementioned preset second distance is less than or equal to the preset first distance.

It can be understood that the first recovery path refers to a path for moving back and forth and recovering residual water stains on a last section of the path of the surface scrubbing operation. It can be understood that the first recovery path includes two sections. One section is a path for moving the preset first distance back from the operation end point of the operation path to make the robot reach the preset first end point; the other section is a path for moving the preset second distance from the preset first end point to the operation end point to make the robot reach the preset second end point. The operation end point refers to a path end point corresponding to the operation path when the robot performs the surface scrubbing operation. The preset first distance refers to a preset distance for the robot to move back from the operation end point to the preset first end point. A specific value of the preset first distance can be obtained according to an analog test or a simulation test, for example, the preferred value is 10 meters. The preset second distance refers to a preset distance for the robot to move from the preset first end point to the preset second end point along a direction of the operation end point. A value of the preset second distance can be obtained according to an analog test or a simulation test, for example, the value is 9.5 meters. The preset second distance is set to be less than or equal to the preset first distance. When the preset second distance is equal to the preset first distance, the preset second end point coincides with the operation end point. At this time, the first recovery path is a recovery path of the robot firstly moving the preset first distance back from the operation end point of the operation path to reach the preset first end point, and then returning from the preset first end point to the operation end point. It can be understood that, at this time, the robot can be controlled to make multiple back and forth movements on the first recovery path and recover the residual water stains until a more ideal residual-water-stain recovery effect is achieved. When the preset second distance is less than the preset first distance, there is a distance difference (that is, the difference between the preset first distance and the preset second distance) between the preset second end point and the operation end point. At this time, the aforementioned residual-water-stain recovery path can further include a second recovery path.

In the present embodiment, the robot is controlled to move on the first recovery path so as to control the robot to recover the residual water stains on a path corresponding to the first recovery path.

In one embodiment, the processor executes the computer-readable instruction to implement the following steps:

in the process of controlling the robot to move on the first recovery path, controlling the clean-water pump of the robot to stop pumping water, controlling the main brush of the robot to continue to rotate in a lifted state, and controlling the water-sucking scratcher of the robot working at first pressure and the fan of the robot working at first wind power to perform a recovery task to recover the residual water stains.

The clean-water pump is a component configured to control the release of a certain amount of cleaning medium in the clean-water tank. water-pumping discharge of the clean-water pump can be adjusted according to actual needs. The larger the water-pumping discharge, the more the water released at one time. The main brush is a brush configured to clean the ground surface. The main brush may be a roller brush or a disc brush, etc., which is not limited here. The rising and lowering of the main brush is controlled by a push rod motor of the main brush. When the main brush is not needed to perform cleaning operations, the push-rod motor of the main brush can drive a push rod to rise to lift the main brush without contacting the ground surface. When the main brush is needed to perform cleaning operations, the push-rod motor of the main brush drives the push rod to fall to lower the main brush with contacting the ground surface. The rotation of the main brush when performing operations or drying residual water stains can be driven by a rotation motor of the main brush. The water-sucking scratcher is a component configured to gather and scrape water stains and other dirt on the ground surface. The water-sucking scratcher can be raised and lowered by a push-rod motor of the water-sucking scratcher. When the water-sucking scratcher is not needed to perform cleaning operations, the push-rod motor of the water-sucking scratcher can drive a push rod to rise to lift the water-sucking scratcher without contacting the ground surface. When the water-sucking scratcher is needed to perform operations, the push-rod motor of the water-sucking scratcher drives the push rod to fall to lower the water-sucking scratcher with contacting the ground surface. The greater the pressure of the water-sucking scratcher on the ground, the better the effect of gathering and scraping water stains. The fan refers to a component that generates an attractive force. It can be understood that the fan generates the attractive force and sucks residual water stains into the sewage tank through a sewage-suction pipe. The first pressure refers to preset pressure of the main brush that controls the robot during the movement of the first recovery path, which can be set according to actual needs. The first wind power refers to preset wind power of the fan that controls the robot during the movement of the first recovery path. The value of the first wind power can be set according to actual needs.

Exemplarily, when the processor of the robot controls the robot to move on the first recovery path, the robot's clean-water pump is controlled to stop pumping water, the robot's main brush is lifted and then is controlled to continue rotating in the lifted state, and the robot's water-sucking scratcher at the first pressure and fan at the first wind power are controlled to recover residual water stains.

In the present embodiment, during controlling the robot to move on the first recovery path, the robot moves back and forth in the last section of the path. During the movement, the residual water stains in the last section of the path are recovered, thereby reducing the residual water stains in the last section of the path. Moreover, during the movement on the first recovery path, the clean-water pump is controlled to stop pumping water to avoid adding new residual water stains in the last section of the path, and the lifted main brush is controlled to continue to rotate. The main brush rotates to throw the residual water stains located on the main brush to the ground surface, and the water-sucking scratcher and the fan recover the residual water stains thrown on the ground surface, thereby reducing the residual water stains on the main brush.

In one embodiment, when the processor executes the computer-readable instruction, the following steps are implemented:
when the robot is controlled to complete moving on the first recovery path, controlling the robot to stop moving and the main brush of the robot to stop rotating, adjusting the wind power of the fan of the robot to a preset wind power, and controlling the fan of the robot to continue running for a preset first duration.

The preset wind power refers to preset wind power of the fan when the robot stops moving. The preset wind power can be set according to the performance of the fan. The preset first duration refers to a preset shorter duration when the robot stops moving so that the cleaning component of the robot can start or stop, for example, 5 seconds or 10 seconds.

Exemplarily, when the processor of the robot controls the robot to stop moving after the completed movement of the robot on the first recovery path, the main brush of the robot is controlled to stop rotating during the process of stopping movement, the wind power of the fan of the robot is adjusted to the preset wind power, and the fan of the robot is adjusted to continue running for the preset first duration and then stop.

In one embodiment, when the preset second distance is less than the preset first distance, the residual-water-stain recovery path further includes a second recovery path. After controlling the robot to move on the aforementioned first recovery path, the robot is controlled to move on the second recovery path to recover residual water stains.

In one embodiment, when the processor executes the computer-readable instruction, the following steps are implemented:
during controlling the robot to move on the second recovery path, controlling the robot to move from the aforementioned preset second end point to the operation end point, then controlling the robot to move from the operation end point to the preset second end point, and updating a quantity of back-and-forth movement times until the quantity is equal to a preset quantity of times.

The second recovery path refers to a path for back-and-forth movements and recovery of residual water stains in the last section of path of the surface scrubbing operation. It can be understood that the second recovery path includes two sections of path, one of which is a path from the preset second end point to the operation end point; the other is a path from the operation end point back to the preset second end point. The quantity of back-and-forth movement times refers to the number of times the robot moves from the preset second end point to the operation end point, and then from the operation end point to the preset second end point. The preset quantity of times can be obtained by means of an analog test or a computer simulation test, and an ideal water stain residual rate can be achieved. For example, the obtained preset quantity of times are 3 or 4.

Exemplarily, during controlling the robot to move on the second recovery path, the processor of the robot controls the robot to move from the preset second end point to the operation end point at a preset speed, and then controls the robot to move from the operation end point to the preset second end point at the preset speed. The quantity of back-and-forth movement times are updated to obtain an updated quantity, and the updated quantity is compared with the preset quantity of times. If the updated quantity is less than the preset quantity of times, the above movement process is repeated until the updated quantity is equal to the preset quantity of times.

In one embodiment, when the processor executes the computer-readable instruction, the following steps are implemented:
during controlling the robot to move on the second recovery path, controlling the clean-water pump of the robot to stop pumping water and the main brush of the robot to lift, controlling both the water-sucking scratcher of the robot at second pressure and the fan at a second wind power to recover the residual water stains on the cleaning component of the robot.

The main brush of the robot can be set to rotate or stop rotating, as long as the main brush is lifted and does not contact the operation surface. The second pressure refers to a preset pressure of the main brush that controls the robot during the movement of the second recovery path. The second pressure can be the same as the first pressure, or different from the first pressure, and the second pressure can be set according to actual needs. The second wind power refers to a preset wind power of the fan that controls the robot during the movement of the second recovery path. The second wind power can be the same as the first wind power, or different from the first wind power, and the second wind power can be set according to actual needs. The cleaning component refers to a relevant parts of the robot for performing the surface scrubbing operation. The cleaning component includes but is not limited to a side brush, a clean-water pump, a main brushes, a dust box, a water-sucking scratcher, and a sewage-suction pipe.

Exemplarily, when the processor of the robot controls the robot to move on the second recovery path, the clean-water pump of the robot stops pumping water, the main brush of the robot is lifted, and the water-sucking scratcher of the robot uses the second pressure and the fan uses the second wind power to recover residual water stains flowing from the cleaning component to the ground surface, especially residual water stains flowing from the dust box, thereby recovering the residual water stains on the cleaning component of the robot.

In the present embodiment, by controlling the robot to move on the second recovery path, the residual water stains on the cleaning component of the robot are vibrated and flow to the ground surface during repeated back-and-forth movements of the robot, and the residual water stains on the ground surface are recovered, thereby further reducing the recovery of the residual water stains.

In one embodiment, during controlling the robot to move on the second recovery path, the processor of the robot controls the robot to move from the preset second end point corresponding to the first recovery path to the operation end point of the operation path at a preset speed, and then controls the robot to move from the operation end point to the preset second end point at the preset speed, and updates a quantity of back-and-forth movement times until the quantity is equal to a preset quantity of times.

It is understood that in order to prevent the robot from causing an accident due to sudden back-and-forth movements on the second recovery path, in one embodiment, the robot is controlled to move at the preset speed and to issue a voice reminder during controlling the robot to move on the second recovery path. The preset speed is a relatively slow speed, for example, 0.25 m/s.

In one embodiment, when the processor executes the computer-readable instruction, the following steps are implemented:
when the robot is controlled to complete the movement on the second recovery path, controlling the water-sucking scratcher of the robot to lift, and controlling the fan of the robot to continue to run for a preset second duration to recover residual water stains on the sewage-suction pipe and water-sucking scratcher of the robot.

The sewage-suction pipe refers to a pipe connecting the water-sucking scratcher and the sewage tank. The preset second duration refers to a preset duration for the fan to continue to run after the robot completes the movement on the second recovery path.

Exemplarily, when the processor of the robot controls the robot to complete the movement of the second recovery path, the water-sucking scratcher of the robot is controlled to lift, and then the fan of the robot is controlled to continue running for the preset second duration to recover the residual water stains on the sewage-suction pipe and water-sucking scratcher of the robot.

In the present embodiment, when the robot completes the movement on the second recovery path, the robot stops moving and lifts the water-sucking scratcher. There are residual water stains on the water-sucking scratcher and the sewage-suction pipe. The fan continues to run for the preset second duration to recover the residual water stains of the water-sucking scratcher and the sewage-suction pipe into the sewage tank, thereby preventing the residual water stains of the water-sucking scratcher and the sewage-suction pipe from flowing onto the ground surface, further reducing the residual water stains on the ground surface.

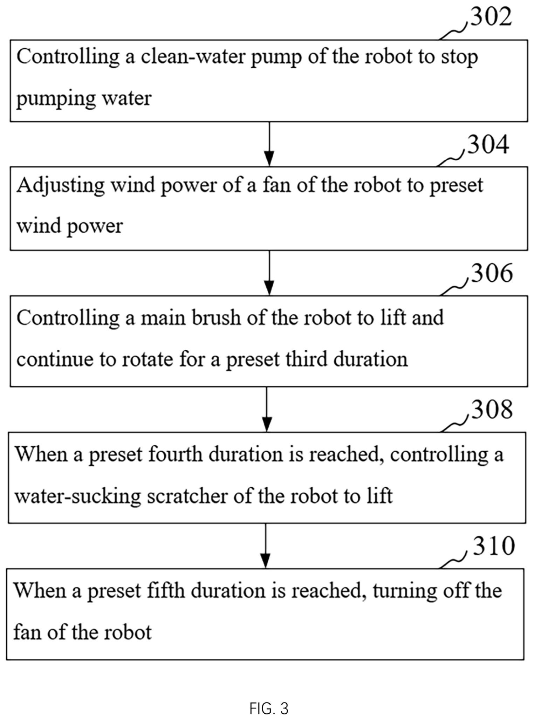

As shown in FIG. 3, in one embodiment, when the robot does not change position during the surface scrubbing operation, the processor implements the following steps when executing the computer-readable instruction:
Step 302, controlling the clean-water pump of the robot to stop pumping water.

Exemplarily, when an operator triggers a pause control button or a movement-stop control button, the processor of the robot receives a pause instruction or a movement-stop instruction, and controls the clean-water pump of the robot to stop pumping water immediately.

Step 304, adjusting the wind power of the fan of the robot to preset wind power.

The preset wind power refers to a wind power of the fan that is preset when the robot pauses or stops moving. For example, the preset wind power is 95% of the maximum power of the fan.

Step 306, controlling the main brush of the robot to lift, where the main brush in a lifted state continues to rotate for a preset third duration.

The preset third duration refers to a preset duration of the main brush from lifting to stopping rotation when the robot pauses or stops moving, for example, 5 seconds.

Step 308, when a preset fourth duration is reached, controlling the water-sucking scratcher of the robot to lift.

The preset fourth duration refers to a preset duration from when the main brush stops rotating to when the water-sucking scratcher is lifted when the robot pauses or stops moving, for example, 20 seconds.

Step 310, when a preset fifth duration is reached, turning off the fan of the robot.

The preset fifth duration refers to a preset duration from when the water-sucking scratcher is lifted to when the fan is turned off when the robot pauses or stops moving, for example, 20 seconds.

In the present embodiment, when the robot is stationary, the processor of the robot, controls the clean-water pump to stop pumping water immediately, which can avoid the increase of residual water stains on the ground surface where the robot is staying; then adjusts the wind power of the fan to the maximum wind power, the fan recovering the residual water stains on the ground surface; and then lifts the main brush. After the main brush is lifted, the main brush continues to rotate for the preset third duration, and throws the residual water stains on the main brush onto the ground surface. The water-sucking scratcher gathers the residual water stains on the ground surface together, and the fan recovers the gathered residual water stains. After controlling the water-sucking scratcher to work for the preset fourth duration, the water-sucking scratcher is lifted, and the fan continues to run and continues to recover the residual water stains on the water-sucking scratcher, the sewage-suction pipe, and the ground surface until the preset fifth duration is reached. The fan of the robot is turned off to reduce the residual water stains on the ground surface where the robot is staying.

In one embodiment, when the processor executes the computer-readable instruction, the following steps are implemented:

During the movement of the robot based on the operation path, when a distance between the robot and the operation end point of the operation path is equal to a water-pumping adjustment distance, the water-pumping discharge of the clean-water pump of the robot is adjusted to preset water-pumping discharge.

The water-pumping adjustment distance refers to a distance between the robot and the operation end point when the water-pumping discharge of the clean-water pump needs to be adjusted. The water-pumping adjustment distance is a preset distance. It can be understood that as the robot gets closer and closer to the operation end point, the amount of mud and sand in the residual water stains on the operation surface increases. When the distance between the robot and the operation end point reaches the water-pumping adjustment distance, the recovery rate of residual water stains is increased by increasing the water-pumping discharge. For example, the water-pumping adjustment distance is 20 meters. The preset water-pumping discharge refers to preset water-pumping discharge of the clean-water pump when the distance between the robot and the operation end point is equal to the water-pumping adjustment distance. The preset water-pumping discharge can be set to the maximum water-pumping discharge.

Exemplarily, during controlling the robot to move on the operation path, the processor of the robot calculates the distance between the robot and the operation end point, compares the distance with the water-pumping adjustment distance, and when the distance is equal to the water-pumping adjustment distance, adjusts the water-pumping discharge of the clean-water pump of the robot to the preset water-pumping discharge.

In one embodiment, during the movement of the robot based on the operation path, a current position of the robot is obtained based on a preset time interval, and an interval distance between the robot and the operation end point is calculated based on the current position of the robot. When the interval distance is equal to or less than the water-pumping adjustment distance, the water-pumping discharge of the clean-water pump of the robot is adjusted to the preset water-pumping discharge.

In the present embodiment, when the processor of the robot controls the robot to move on the operation path, as the distance between the robot and the operation end point gets closer, the mud and sand in the residual water stains on the ground surface increase, and the robot's recovery rate of the residual water stains on the ground surface decreases. When the distance between the robot and the operation end point is equal to the water-pumping adjustment distance, the residual water stains are diluted by adjusting the water-pumping discharge of the clean-water pump, thereby improving the recovery rate of the residual water stains and reducing the residual water stains on the path.

In an exemplary embodiment, during the surface scrubbing operation of the robot, when the operator triggers the pause control button or the movement-stop control button, the processor of the robot receives the pause instruction or the movement-stop instruction, controls the clean-water pump of the robot to immediately stop pumping water, adjusts the wind power of the fan of the robot to 95%, and controls the main brush of the robot to lift. After the main brush continues to rotate for 5 seconds, the processor controls the main brush to stop rotating. 20 seconds after the main brush stops rotating, the processor controls the water-sucking scratcher of the robot to lift. 20 seconds after the water-sucking scratcher is lifted, the processor turns off the fan of the robot.

During controlling the robot to move on the operation path, the processor of the robot calculates the distance between the robot and the operation end point, and adjusts the water-pumping discharge of the robot to the maximum water-pumping discharge when the distance is equal to 20 meters. When the robot reaches the operation end point of the operation path, the clean-water pump is controlled to stop pumping water, the main brush is controlled to lift, and the main brush is controlled to continue to rotate for 10 seconds before stopping. The processor of the robot generates the first recovery path and the second recovery path based on the operation path.

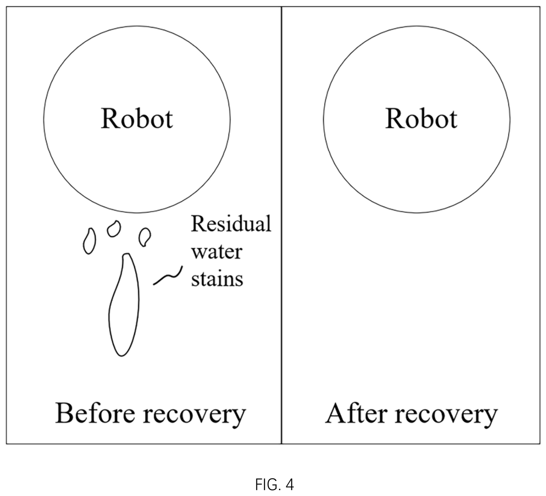

In an embodiment, during controlling the robot to move on the first recovery path, the processor of the robot controls the robot to move 10 meters back from the operation end point of the operation path to reach the first end point, and then controls the robot to move 9.5 meters from the first end point to the operation end point to reach the second end point. During this process, the processor of the robot controls the clean-water pump of the robot to stop pumping water, controls the main brush of the robot to lift, controls the main brush to continue to rotate in the lifted state, and controls the water-sucking scratcher and fan of the robot to recover the residual water stains on the path corresponding to the first recovery path. When controls the robot's complete movement on the first recovery path, the processor of the robot controls the robot to temporarily stop moving, then controls the main brush of the robot to stop rotating, and adjusts the wind power of the fan of the robot to 95%. The processor of the robot controls the robot to move on the second recovery path after the robot temporarily stops moving for 5 seconds. During the robot's movement on the second recovery path, the processor of the robot controls the robot to move from the second end point of the first recovery path to the operation end point of the operation path at a speed of 0.25 m/s, and then controls the robot to move from the operation end point to the second end point, where the above movement process is repeated 4 times. During this process, the clean-water pump of the robot is controlled to stop pumping water, the main brush of the robot is controlled to lift, and the water-sucking scratcher and fan of the robot are controlled to recover the residual water stains on the path, so as to recycle the residual water stains on the cleaning component of the robot. Before the robot moves on the first recovery path and the second recovery path, there are residual water stains on the ground surface. After the robot moves on the first recovery path and the second recovery path, there are no residual water stains or almost no residual water stains on the ground surface, as shown in FIG. 4.

In the above-mentioned residual-water-stain recovery method, when the robot completes the surface scrubbing operation, the first recovery path and the second recovery path are generated according to the operation path, and the robot is controlled to move on the first recovery path. The robot performs two back-and-forth movements in the last section of the path. During the two movements, the robot recovers the residual water stains on the last section of the path twice again, and throws the water stains on the main brush to the first recovery path for recovery, thereby reducing the residual water stains on the last section of the path. Then the robot is controlled to move on the second recovery path, and the robot performs multiple back-and-forth movements in the last short section of the path at operation end point. During this movement, the residual water stains on the cleaning component of the robot are vibrated to the ground surface and recovered together with the residual water stains on the second recovery path. In this way, there are no water stains remaining on the path close to a place where the surface scrubbing operation is ended, and there are basically no water stains flowing down from the cleaning component on the ground surface at the operation end point of the robot, so that the recovery of residual water stains is finally achieved.

It should be understood that, although the steps in the flow charts involved in the above-mentioned embodiments are displayed in sequence according to the indication of the arrows, these steps are not necessarily executed in sequence according to the orders indicated by the arrows. Unless there is a clear explanation in the present disclosure otherwise, the execution of these steps does not have a strict order restriction, and these steps may be executed in other orders. Moreover, at least a part of these steps in the flow charts involved in the above-mentioned embodiments can include multiple steps or multiple stages, and these steps or stages are not necessarily executed at the same time, but can be executed at different times, and the execution order of these steps or stages is not necessarily to be carried out in sequence, but may be executed in turn or alternately with other steps or at least a part of the steps or stages in other steps.

Based on the same inventive concept, the embodiments of the present disclosure further provides a residual-water-stain recovery apparatus for implementing the residual-water-stain recovery method involved above. Implementation solutions for solving problems provided by the apparatus are similar to the implementation solutions recorded in the above method, so limitations in one or more residual-water-stain recovery apparatus embodiments provided below can refer to the limitations of the residual-water-stain recovery method above, and are not repeated here.

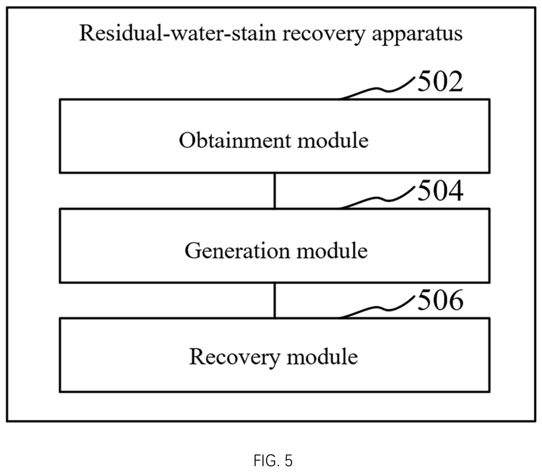

In one embodiment, as shown in FIG. 5, a residual-water-stain recovery apparatus is provided, including: an obtainment module 502, a generation module 504, and a recovery module 506.

The obtainment module 502 is configured to obtain an operation path of a robot when the robot completes a surface scrubbing operation.

The generation module 504 is configured to generate a residual-water-stain recovery path based on the operation path.

The recovery module 506 is configured to control the robot to move on the residual-water-stain recovery path to recover residual water stains on the residual-water-stain recovery path.

In one embodiment, the recovery module 506 is further configured to: during controlling the robot to move on a first recovery path, control the robot to move back a preset first distance from an operation end point of the operation path to reach a preset first end point, and then control the robot to move from the preset first end point to the operation end point to reach a preset second end point that is a preset second distance away from the operation end point, where the preset second distance is less than the preset first distance.

In one embodiment, the recovery module 506 is further configured to: during controlling the robot to move on a first recovery path, control a clean-water pump of the robot to stop pumping water, control a main brush of the robot to continue rotating in a lifted state, control a water-sucking scratcher of the robot at first pressure and a fan of the robot at first wind power to perform a recovery task, so as to recover residual water stains on the first recovery path.

In one embodiment, the recovery module 506 is further configured to: when the robot is controlled to complete movement on the first recovery path, control the robot to stop moving, control the main brush of the robot to stop rotating, adjust wind power of the fan of the robot to preset wind power, and control the fan of the robot to continue running for a preset first duration.

In one embodiment, the recovery module 506 is further configured to: during controlling the robot to move on the second recovery path, control the robot to move from the preset second end point to the operation end point at a preset speed, then control the robot to move from the operation end point to the preset second end point at the preset speed, and update a quantity of back-and-forth movement times until the quantity is equal to a preset quantity of times.

In one embodiment, the recovery module 506 is further configured to: during controlling the robot to move on the second recovery path, control the clean-water pump of the robot to stop pumping water, control the main brush of the robot to lift, control the water-sucking scratcher of the robot at second pressure and the fan of the robot at second wind power to perform the recovery task, so as to recover residual water stains on a cleaning component of the robot.

In one embodiment, the recovery module 506 is further configured to: when the robot is controlled to complete movement on the residual-water-stain recovery path, control the water-sucking scratcher of the robot to lift, control the fan of the robot to continue running for a preset second duration to recover residual water stains on a sewage-suction pipe of the robot and the water-sucking scratcher of the robot.

In one embodiment, the residual-water-stain recovery apparatus further includes an in-situ residual-water-stain recovery module that is configured to: control the clean-water pump of the robot to stop pumping water; adjust the wind power of the fan of the robot to the preset wind power; control the main brush of the robot to lift up, where the main brush in the lifted state continues to rotate for a preset third duration; when a preset fourth duration is reached, control the water-sucking scratcher of the robot to lift; and when a preset fifth duration is reached, turn off the fan of the robot.

In one embodiment, the residual-water-stain recovery device further includes a water-pumping adjustment module that is configured to: during the movement of the robot based on the operation path, when a distance between the robot and the operation end point of the operation path is equal to a water-pumping adjustment distance, adjust water-pumping discharge of the clean-water pump of the robot to preset water-pumping discharge.

Each module in the above-mentioned residual-water-stain recovery apparatus can be fully or partially implemented by software, hardware, and their combination. The above-mentioned modules may be embedded in or independent of a processor in the robot in the form of hardware, or may be stored in a memory of the robot in the form of software, so that the processor can call and execute operations corresponding to each module.

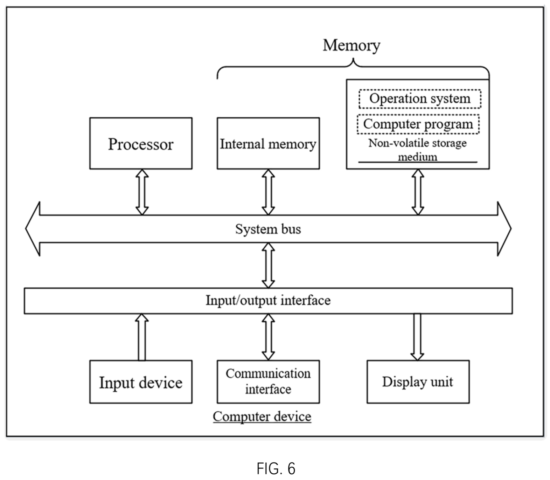

In one embodiment, a robot is provided, and an internal structure of the robot can be shown in FIG. 6. The robot includes a processor, a memory, a communication interface, a display screen, and an input device all connected through a system bus. The processor of the robot is configured to provide computing and control capabilities. The memory of the robot includes a non-volatile storage medium and an internal memory. The non-volatile storage medium stores an operation system and a computer program. The internal memory provides an operation environment for the operation system and the computer program in the non-volatile storage medium. The communication interface of the robot is configured to communicate with an external robot in a wired or wireless manner. The wireless manner may be achieved through WIFI, or an operator network, or NFC (near field communication), or other technologies. When the computer program is executed by the processor, the residual-water-stain recovery method is implemented. The display screen of the robot may be a liquid-crystal display screen or an electronic-ink display screen. The input device of the robot may be a touch layer covered on the display screen, or may be a button, or a trackball, or a touch pad all arranged at a housing of the robot, or may be an external keyboard, or an external touch pad, or an external mouse, etc.

Those skilled in the art can understand that the structure shown in FIG. 6 is merely a block diagram of a partial structure related to the solutions of the present disclosure, and does not constitute a limitation on the robot to which the solutions of the present disclosure are applied. The present robot may include more or fewer components than shown in the figure, or combine certain components, or have a different component arrangement.

In one embodiment, a robot is further provided, including a memory, a processor, and a computer-readable instruction stored in the memory and executable on the processor. The steps in the above-mentioned method embodiments are implemented when the processor executes the computer instruction.

In one embodiment, a computer-readable storage medium is provided, storing a computer program. The steps in the above-mentioned method embodiments are implemented when a processor executes the computer program.

In one embodiment, a computer program product or a computer program is provided. The computer program product or the computer program includes a computer instruction stored in a computer-readable storage medium. A processor of a robot reads the computer instruction from the computer-readable storage medium, and the processor executes the computer instruction, so that the robot performs the steps in the above-mentioned method embodiments.

It should be noted that user information (including but not limited to user device information, user personal information, etc.) and data (including but not limited to data used for analysis, stored data, displayed data, etc.) involved in the present disclosure are all information and data authorized by users or fully authorized by all parties.

It can be understood by those ordinary skilled in the art that all or a part of a process in the above method embodiments can be completed by instructing related hardware through a computer program. The computer program can be stored in a non-volatile computer-readable storage medium, and when executed, the computer program can include the processes of the above method embodiments. Any reference to a memory, or a database, or other media used in each embodiment provided by the present disclosure may include a non-volatile and/or volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), or a graphene memory, etc. The volatile memory may include a random access memory (RAM), or an external cache memory, etc. As an illustration and not a limitation, RAM can be in various forms, such as a static random access memory (SRAM), or a dynamic random access memory (DRAM), etc. The database involved in each embodiment provided in the present disclosure may include at least one of a relational database and a non-relational database. The non-relational database may include a distributed database based on blockchain, etc., but is not limited thereto. The processor involved in each embodiment provided in the present disclosure may be a general-purpose processor, a central processor, a graphics processor, a digital signal processor, a programmable logic device, a data processing logic device based on quantum computing, or other processors, but is not limited thereto.

The technical features of the above-mentioned embodiments can be randomly combined. To make the description concise, not all possible combinations of the technical features in the above-mentioned embodiments are described. As long as there is no contradiction in the combinations of these technical features, these technical features should be considered to be within the scope of the present disclosure.

The above-mentioned embodiments only describe some implementations of the present disclosure, and the description thereof is relatively specific and detailed but cannot be construed as limiting the scope of the present disclosure. It should be pointed out that, for those ordinary skilled in the art, multiple variations and improvements can be made without departing from the concept of the present disclosure and all belong to the protection scope of the present disclosure. Therefore, the protection scope of the present disclosure should be subject to the attached claims.

## Claims

1. A robot, comprising a memory, a processor, and a computer-readable instruction stored in the memory and executable on the processor, wherein the processor implements following steps when executing the computer-readable instruction:
when the robot completes a surface scrubbing operation, obtaining an operation path of the robot;
based on the operation path, generating a residual-water-stain recovery path; and,
controlling the robot to move on the residual-water-stain recovery path to recover residual water stains.

2. The robot according to claim 1, wherein the residual-water-stain recovery path comprises a first recovery path, and the processor implements following steps when executing the computer readable instruction:
during controlling the robot to move on the first recovery path, controlling the robot to move back a preset first distance from an operation end point of the operation path to reach a preset first end point, and then controlling the robot to move from the preset first end point to the operation end point to reach a preset second end point that is a preset second distance away from the preset first end point, wherein the preset second distance is less than or equal to the preset first distance.

3. The robot according to claim 2, wherein the processor implements following steps when executing the computer readable instruction:
during controlling the robot to move on the first recovery path, controlling a clean-water pump of the robot to stop pumping water, controlling a main brush of the robot to continue rotating in a lifted state, and controlling a water-sucking scratcher of the robot at first pressure and a fan of the robot at first wind power to perform a recovery task to recover the residual water stains.

4. The robot according to claim 3, wherein the processor implements following steps when executing the computer readable instruction:
when the robot is controlled to complete movement on the first recovery path, controlling the robot to stop moving, controlling the main brush of the robot to stop rotating, adjusting wind power of the fan of the robot to preset wind power, and controlling the fan of the robot to continue running for a preset first duration.

5. The robot according to claim 2, wherein when the preset second distance is less than the preset first distance, the residual-water-stain recovery path further comprises a second recovery path, and the processor implements following steps when executing the computer-readable instruction:
during controlling the robot to move on the second recovery path, controlling the robot to move from the preset second end point to the operation end point, then controlling the robot to move from the operation end point to the preset second end point, and updating a quantity of back-and-forth movement times until the quantity is equal to a preset quantity of times.

6. The robot according to claim 5, wherein the processor implements following steps when executing the computer readable instruction:
during controlling the robot to move on the second recovery path, controlling a clean-water pump of the robot to stop pumping water, controlling a main brush of the robot to lift, controlling a water-sucking scratcher of the robot at second pressure and a fan of the robot at second wind power to perform a recovery task to recover residual water stains on a cleaning component of the robot.

7. The robot according to claim 1, wherein the processor implements following steps when executing the computer readable instruction:
when the robot is controlled to complete movement on the residual-water-stain recovery path, controlling a water-sucking scratcher of the robot to lift, and controlling a fan of the robot to continue running for a preset second duration to recover residual water stains on both a sewage-suction pipe of the robot and the water-sucking scratcher of the robot.

8. The robot according to claim 1, wherein when the robot does not change position during the surface scrubbing operation, the processor implements following steps when executing the computer readable instruction:
controlling a clean-water pump of the robot to stop pumping water;
adjusting wind power of a fan of the robot to preset wind power;
controlling a main brush of the robot to lift and continue to rotate for a preset third duration; when a preset fourth duration is reached, controlling a water-sucking scratcher of the robot to lift; and,
when a preset fifth duration is reached, turning off the fan of the robot.

9. The robot according to claim 1, wherein the processor implements following steps when executing the computer readable instruction:
during a movement of the robot based on the operation path, when a distance between the robot and an operation end point of the operation path is equal to a water-pumping adjustment distance, adjusting water-pumping discharge of a clean-water pump of the robot to preset water-pumping discharge.

10. A residual-water-stain recovery method, comprising following steps:
when a robot completes a surface scrubbing operation, obtaining an operation path of the robot;
based on the operation path, generating a residual-water-stain recovery path; and,
controlling the robot to move on the residual-water-stain recovery path to recover residual water stains.

11. A residual-water-stain recovery apparatus, comprising:
an obtainment module, configured to: when a robot completes a surface scrubbing operation, obtain an operation path of the robot;
a generation module, configured to: based on the operation path, generate a residual-water-stain recovery path; and,
a recovery module, configured to: control the robot to move on the residual-water-stain recovery path to recover residual water stains.

12. The apparatus according to claim 11, wherein the recovery module is further configured to:
during controlling the robot to move on a first recovery path, control the robot to move back a preset first distance from an operation end point of the operation path to reach a preset first end point, and then control the robot to move from the preset first end point to the operation end point to reach a preset second end point that is a preset second distance away from the preset first end point, wherein the preset second distance is less than or equal to the preset first distance.

13. The apparatus according to claim 12, wherein the recovery module is further configured to:
during controlling the robot to move on the first recovery path, control a clean-water pump of the robot to stop pumping water, control a main brush of the robot to continue rotating in a lifted state, and control a water-sucking scratcher of the robot at first pressure and a fan of the robot at first wind power to perform a recovery task to recover the residual water stains.

14. The apparatus according to claim 13, wherein the recovery module is further configured to:
when the robot is controlled to complete movement on the first recovery path, control the robot to stop moving, control the main brush of the robot to stop rotating, adjust wind power of the fan of the robot to preset wind power, and control the fan of the robot to continue running for a preset first duration.

15. The apparatus according to claim 12, wherein the recovery module is further configured to:
during controlling the robot to move on a second recovery path, control the robot to move from the preset second end point to the operation end point, then control the robot to move from the operation end point to the preset second end point, and update a quantity of back-and-forth movement times until the quantity is equal to a preset quantity of times.

16. The apparatus according to claim 15, wherein the recovery module is further configured to:
during controlling the robot to move on the second recovery path, control a clean-water pump of the robot to stop pumping water, control a main brush of the robot to lift, control a water-sucking scratcher of the robot at second pressure and a fan of the robot at second wind power to perform a recovery task to recover residual water stains on a cleaning component of the robot.

17. The apparatus according to claim 11, wherein the recovery module is further configured to:
when the robot is controlled to complete movement on the residual-water-stain recovery path, control a water-sucking scratcher of the robot to lift, and control a fan of the robot to continue running for a preset second duration to recover residual water stains on both a sewage-suction pipe of the robot and the water-sucking scratcher of the robot.

18. The apparatus according to claim 11, further comprising an in-situ residual-water-stain recovery module, wherein the in-situ residual-water-stain recovery module is configured to:
control a clean-water pump of the robot to stop pumping water;
adjust wind power of a fan of the robot to preset wind power;
control a main brush of the robot to lift and continue to rotate for a preset third duration;
when a preset fourth duration is reached, control a water-sucking scratcher of the robot to lift; and,
when a preset fifth duration is reached, turn off the fan of the robot.

19. The apparatus according to claim 11, further comprising a water-pumping adjustment module, wherein the water-pumping adjustment module is configured to:
during a movement of the robot based on the operation path, when a distance between the robot and an operation end point of the operation path is equal to a water-pumping adjustment distance, adjust water-pumping discharge of a clean-water pump of the robot to preset water-pumping discharge.

20. A computer-readable storage medium, storing a computer program, wherein the computer program is executed by a processor to implement the executed steps of the robot according to any one of claims 1 to 9.

21. A computer program product, comprising a computer program, wherein the computer program is executed by a processor to implement the steps of the method according to any one of claims 1 to 9.
